# EUROPÄISCHE PATENTSCHRIFT

(11) **EP 0 859 676 B1**
(45) Veröffentlichungstag und Bekanntmachung des Hinweises auf die Patenterteilung: **07.07.1999**
(21) Anmeldenummer: 96938138.3
(22) Anmeldetag: 07.11.1996
(51) Int. Cl.: B22D 11/128, B21B 27/08

(54) **DREHDURCHFÜHRUNG FÜR DIE KÜHLWASSERZU- UND -ABLEITUNG EINER FÜHRUNGSROLLE IN EINER STRANGGIESSANLAGE**
TURNING PASSAGE FOR THE FEED AND DISCHARGE OF COOLING WATER OF A GUIDE ROLL IN A CONTINUOUS CASTING SYSTEM
PASSAGE TOURNANT POUR L'AMENEE ET L'EVACUATION DE L'EAU DE REFROIDISSEMENT D'UN ROULEAU DE GUIDAGE DANS UNE INSTALLATION DE COULEE CONTINUE

(30) Priorität: 08.11.1995 DE 19541615
(43) Veröffentlichungstag der Anmeldung: 26.08.1998
(73) Patentinhaber: Thyssen Stahl Aktiengesellschaft, 47166 Duisburg (DE)
(72) Erfinder: KRUME, Walter, D-47495 Rheinberg (DE)
(74) Vertreter: Knauf, Rudolf, Dipl.-Ing.
(86) Internationale Anmeldenummer: EP9604875
(87) Internationale Veröffentlichungsnummer: WO9717152

(56) Entgegenhaltungen:
- DE-C- 4 207 042
- FR-A- 2 291 815
- GB-A- 2 027 166
- GB-A- 2 046 386

## Beschreibung

Wegen der hohen Temperatur eines aus einer Durchlaufkokille kommenden Metallbandes sind die Führungsrollen einer aus der Praxis bekannten Stranggießanlage mit Kühlwasser gekühlt, das zentral über eine Drehdurchführung an einer oder beiden Stirnseiten der Führungsrolle einem in jeder Führungsrolle vorgesehenen Verteilungssystem zu- und von diesem wieder abgeführt wird. Da die Führungsrollen sich im Betrieb durchbiegen und auch axial ausdehnen, sind die an den Stirnseiten der wassergekühlten Führungsrollen angeordneten Drehdurchführungen erheblichen mechanischen Belastungen ausgesetzt, die es erforderlich machen, nach verhältnismäßig kurzer Standzeit die Stranggießanlage stillzusetzen und die Drehdurchführungen auszutauschen.

Ein weiterer Nachteil bei den bekannten Stranggießanlagen besteht darin, daß die Führungsrollen mit ihren Lagerzapfen in offenen Lagern gelagert sind, die regelmäßig geschmiert werden müssen. Abgesehen davon, daß damit ein erheblicher Schmiermittelverbrauch verbunden ist, sind die Lager auch Verschmutzungen und damit einem Verschleiß ausgesetzt, so daß auch sie von Zeit zu Zeit ausgewechselt werden müssen, was nur bei Stillstand der Stranggießanlage möglich ist.

Wegen dieser Mängel ist man seit langem bemüht, hier Abhilfe zu schaffen. Bei einer gerade bekannt gewordenen und in der Praxis eingesetzten Drehdurchführung ist vorgesehen, daß der Lagerzapfen der Führungsrolle mit seinem Lager endseitig von einer Abdeckplatte abgedeckt ist, die vom Lagerbock der Führungsrolle getragen ist. Ferner ist dabei vorgesehen, daß zwischen der Abdeckplatte und dem Lagerzapfen eine Abdichtung angeordnet ist, die aus einem in einer zentralen Bohrung der Abdeckplatte axial- und drehbeweglich sowie abgedeckt sitzenden Buchse, einem dicht und drehfest am Lagerzapfen angeschlossenen Flansch und einem zwischen der Buchse und dem Flansch angeordneten flexiblen abdichtenden Verbindungsteil besteht. Das flexible Verbindungsteil ist als rohrförmiger Faltenbalg aus Metall ausgebildet und ist in einem rohrförmigen Ansatz des Flansches angeordnet. Zur Unterbringung dieses Ansatzes mit dem Faltenbalg ist der zentrale Kanal des Verteilsystems in dem Lagerzapfen im Durchmesser vergrößert. Bei einer solchen Drehdurchführung ist gewährleistet, daß durch die Abdeckplatte in Verbindung mit der speziellen Abdichtung einerseits das Lager gegen Verschmutzung von außen an einer Seite geschützt ist und kein Wasser zu dem Lager gelangen kann, und andererseits die Drehdurchführung durch mechanische Kräfte, die durch das Durchbiegen der Führungsrolle und ihre axiale Ausdehnung entstehen, nicht belastet wird. Diese Vorteile wirken sich in einer längeren Standzeit der Drehdurchführung und des Lagers aus. Von Nachteil ist allerdings, daß die zwischen der Abdeckplatte und dem Lagerzapfen wirksame Abdichtung eine recht aufwendige konstruktive Gestaltung hat.

Ausgehend von diesem verbesserten Stand der Technik betrifft somit die Erfindung eine Drehdurchführung für die Kühlwasserzu- und -ableitung einer endseitig mit Lagerzapfen in Lagerböcken drehgelagerten Führungsrolle in einer Stranggießanlage mit einer mindestens einen der Lagerzapfen mit lagerendseitig abdeckenden, vom Lagerbock getragenen Abdeckplatte, an der die Kühlwasserzu- und -ableitung angeschlossen sind, und mit einer zwischen der Abdeckplatte und dem Lagerzapfen wirksamen Abdichtung, die aus einem in einer zentralen Bohrung der Abdeckplatte axial und drehbeweglich abgedichtet sitzenden Buchse, einem dicht und drehfest am Lagerzapfen angeschlossenen Flansch und einem zwischen der Buchse und dem Flansch angeordneten, flexiblen und abdichtenden Mittelteil besteht, und mit einer zentralen Rohrleitung für die Kühlwasserzufuhr, die unter Bildung eines Ringkanals mit der Buchse zu einem Verteilsystem in der Führungsrolle führt, das für die Kühlwasserabfuhr mit dem Ringkanal in Verbindung steht.

Der Erfindung liegt die Aufgabe zugrunde, eine Drehdurchführung der vorgenannten Art zu schaffen, deren zwischen der Abdeckplatte und dem Lagerzapfen wirksame Abdichtung konstruktiv weniger aufwendig als die Abdichtung bei der bekannten Drehdurchführung ist.

Diese Aufgabe wird erfindungsgemäß dadurch gelöst, daß das Mittelteil der Abdichtung als ringförmige, flanschartige Membran aus Kunststoff oder Gummi ausgebildet ist, die mit ihrem inneren Rand an der Außenseite der Buchse und mit ihrem äußeren Rand an dem Flansch anvulkanisiert ist.

Die erfindungsgemäße Drehdurchführung zeichnet sich durch ihre einfache konstruktive und kompakte Gestalt aus. Sie läßt sich komplett an der Stirnseite des Lagerzapfens montieren. Deshalb es es nicht langer erforderlich, den axialen Kanal des Verteilsystems in der Kühlrolle im vorderen stirnseitigen Bereich des Lagerzapfens im Durchmesser zu vergrößern, um darin Teile der Abdichtung unterzubringen. Der zentrale Kanal kann also durchgehend den gleichen Querschnitt haben.

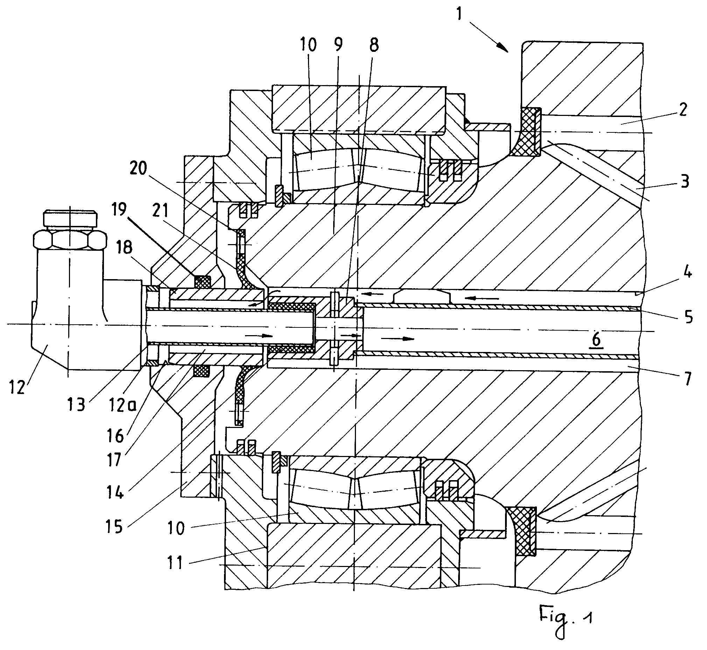

Im folgenden wird die Erfindung anhand einer ein Ausführungsbeispiel darstellenden Zeichnung näher erläutert. Die einzige Figur zeigt im Axialschnitt eine wassergekühlte Führungsrolle einer Stranggießanlage mit ihrem Lager und ihrer Drehdurchführung für das Kühlwasser.

Eine wassergekühlte Führungsrolle 1 weist im äußeren Bereich axial verlaufende Kanäle 2 und darin einmündende bzw. davon ausgehende und zu einem zentralen Verteilsystem führende Kanäle 3 auf. Das zentrale Verteilsystem besteht aus einer axialen mittigen Bohrung 4 in der Führungsrolle 1 und einer darin angeordneten Rohrleitung 5, die einen zentralen Zuführungskanal 6 für das Kühlwasser und einen Ringkanal 7 für die Abführung des Kühlwassers bildet. Die Rohrleitung 5 ist an der Stirnseite mit einem Kupplungsstück 8 versehen.

Die Führungsrolle 1 trägt stirnseitig einen Lagerzapfen 9, der über ein Rollenlager 10 in einem Lagerbock 11 gelagert ist. Um das Kühlwasser zu der Führungsrolle 1 zuzuleiten und von ihr abzuleiten, ist seitlich neben dem Lagerzapfen 9 ein stationärer Verteilkopf 12 vorgesehen, der mit einer drehfest gehaltenen zentralen Rohrleitung 13 an dem sich mit der Führungsrolle 1 drehenden Kupplungsstück 8 angeschlossenen und mittels einer Dichtung 14 im Kupplungsstück 8 abgedichtet ist.

Eine an der Stirnseite des Lagerzapfens 9 angeordnete Abdeckplatte 15 ist an dem Lagerbock 11 befestigt. Diese Abdeckplatte 15 weist eine zentrale Bohrung 16 auf, in der der Verteilkopf 12 mit einem Ansatz 12a steckt. Durch diese zentrale Bohrung 16 ragt auch die Rohrleitung 13 mit radialem Spiel zur Bildung eines Ringkanals 17.

Zwischen der Abdeckplatte 15 und dem Lagerzapfen 9 ist eine Abdichtung wirksam. Diese Abdichtung besteht aus einer Buchse 18, die in der Bohrung 16 mittels einer Rotomatic-Dichtung 19 abgedichtet und drehbeweglich sitzt. Sie besteht ferner aus einem Flansch 20, der dicht an der Stirnseite des Lagerzapfens 9 angeschraubt ist, sowie aus einem Mittelteil 21, das als ringförmige, flanschartige Membran aus Kunststoff oder Gummi ausgebildet ist und mit ihrem inneren Rand an der Außenseite der Buchse 18 und mit ihrem äußeren Rand an dem Flansch 20 anvulkanisiert ist. Dieses flexible Mittelteil 21 erlaubt eine axiale Ausdehnung und eine Durchbiegung der Führungsrolle 1, ohne daß dabei die starr mit dem Lagerbock 11 verbundenen Teile der Drehdurchführung mechanisch belastet werden.

In der Zeichnung ist durch Pfeile in dem Verteilsystem die Fließrichtung des zu- und abgeleiteten Kühlwassers angedeutet. Wegen des abdichtenden flexiblen Mittelteils 21 und der Rotomatic-Dichtung 19 kann kein Kühlwasser in den Raum zwischen der Abdichtung 18,20,21 und der Abdeckplatte 15 und von hier zum Lager 10 gelangen.

## Patentansprüche

1. Drehdurchführung für die Kühlwasserzu- und -ableitung einer endseitig mit Lagerzapfen (9) in Lagerböcken (11) drehgelagerten Führungsrolle (1) in einer Stranggießanlage mit einer mindestens einen der Lagerzapfen (9) mit Lager (10) abdeckenden, vom Lagerbock (11) getragenen Abdeckplatte (15), an der die Kühlwasserzu- und - ableitung (12,13) angeschlossen sind und mit einer zwischen der Abdeckplatte (15) und dem Lagerzapfen (9) wirksamen Abdichtung, die aus einem in einer zentralen Bohrung (16) der Abdeckplatte (15) axial und drehbeweglich abgedichtet sitzenden Buchse (18), einem dicht und drehfest am Lagerzapfen (9) angeschlossenen Flansch (20) und einem zwischen der Buchse (18) und dem Flansch (20) sitzenden flexiblen, abdichtenden Mittelteil (21) besteht, und mit einer zentralen Rohrleitung (13) für die Kühlwasserzufuhr, die unter Bildung eines Ringkanals (17) mit der Buchse (18) zu einem Verteilsystem (2,3,4,5,6,7) in der Führungsrolle (1) führt, das für die Kühlwasserabfuhr mit dem Ringkanal (17) in Verbindung steht,
**dadurch gekennzeichnet,** daß das abdichtende Mittelteil (21) der Abdichtung als ringförmige, flanschartige Membran aus Kunststoff oder Gummi ausgebildet ist und mit ihrem inneren Rand an der Außenseite der Buchse (18) und mit ihrem äußeren Rand an dem Flansch (20) anvulkanisiert ist.

## Claims

1. A rotary transmission leadthrough for the supply and removal of cooling water to and from a guide roller (1) rotatably mounted at its end via bearing pins (9) in bearing blocks. (11) in a continuous casting installation, having: a cover plate (15) which covers at least one of the bearing pins (9) with bearing (10) and which is borne by the bearing block (11) and to which the cooling water supply and removal lines (12, 13) are connected; a seal which is operative between the cover plate (15) and the hearing pin (9) and which consists of a bush (18) disposed sealed axially and rotatably in a central bore (16) of the cover plate (15); a flange (20) connected sealing-tight and non-rotatably to the bearing pin (9); a flexible, sealing central member (21) disposed between the bush (18) and the flange (20); and a central pipe (13) for the cooling water supply which forms an annular channel (17) with the bush (18) and leads to a distributing system (2, 3, 4, 5, 6, 7) in the guide roller (1) which is connected to the annular channel (17) for cooling water removal,
characterised in that the sealing central member (21) of the seal takes the form of an annular, flange-like membrane of plastics or rubber and is vulcanised by its inner edge to the outside of the bush (18) and by its outer edge to the flange (20).

## Revendications

1. Passage tournant pour la conduite d'alimentation d'amenée et d'évacuation d'eau de refroidissement d'un cylindre de guidage (1) dans une installation de coulée continue, monté rotativement à ses extrémités sur des tourillons (9) dans des paliers supports (11), ce passage tournant comprenant au moins une plaque de recouvrement (15) portée par le palier support (11) et recouvrant avec le palier (10) au moins un des tourillons (9), cylindre auquel les conduites d'alimentation d'amenée et d'évacuation (12, 13) sont raccordées, comprenant également une étanchéité agissant entre la plaque de recouvrement (15) et le tourillon (9), cette étanchéité étant constituée d'une douille (18) en appui étanche axialement et montée rotative dans un alésage central (16) de la plaque de recouvrement (15), d'un flasque (20) relié au tourillon (9) de manière étanche et fixe en rotation et d'une pièce centrale (21) étanche et flexible, montée en appui entre la douille (18) et le flasque (20), ainsi que d'une tubulure centrale (13) pour l'amenée d'eau de refroidissement, qui par formation d'un canal annulaire (17) avec la douille (18), conduit à un système répartiteur (2, 3, 4, 5, 6, 7) dans le cylindre de guidage (1) qui se tient en liaison avec le canal annulaire (17) pour l'évacuation de l'eau de refroidissement, caractérisé en ce que la partie centrale étanche (21) de l'étanchéité est constituée par une membrane annulaire en forme de flasque en matière synthétique ou en caoutchouc, qui est vulcanisée par son bord intérieur sur le bord extérieur de la douille (18) et par son bord extérieur sur le flasque (20).
